(19) Europäisches Patentamt
European Patent Office
Office européen des brevets

(11) **EP 3 117 158 B1**

(12) **FASCICULE DE BREVET EUROPEEN**

(45) Date de publication et mention
de la délivrance du brevet:
**22.01.2020 Bulletin 2020/04**

(21) Numéro de dépôt: **15708544.0**

(22) Date de dépôt: **10.03.2015**

(51) Int Cl.:
*F24H 9/20* *(2006.01)*    *H02J 3/14* *(2006.01)*

(86) Numéro de dépôt international:
**PCT/EP2015/054951**

(87) Numéro de publication internationale:
**WO 2015/135934 (17.09.2015 Gazette 2015/37)**

(54) **CHAUFFE-EAU ÉLECTRIQUE RÉGLABLE EN PUISSANCE**

ELEKTRO-WASSERERWÄRMER MIT EINSTELLBARER LEISTUNG

ELECTRIC WATER HEATER WITH ADJUSTABLE POWER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2014 FR 1452015**

(43) Date de publication de la demande:
**18.01.2017 Bulletin 2017/03**

(73) Titulaire: **Electricité de France**
**75008 Paris (FR)**

(72) Inventeurs:
• **BERNASCONI, Stéphane**
**F-77810 Thomery (FR)**
• **COINCE, Anne-Sophie**
**F-77210 Avon (FR)**
• **TESTA, Jacopo**
**I-33052 Cervignano (IT)**
• **WISZNIEWSKI, David**
**F-77670 Saint Mammes (FR)**
• **ZIMMERMANN, Mathieu**
**F-57670 Insming (FR)**

(74) Mandataire: **Regimbeau**
**87 rue de Sèze**
**69477 Lyon Cedex 06 (FR)**

(56) Documents cités:
**EP-A2- 2 610 999    WO-A2-2008/125696**
**FR-A1- 2 582 788**

**Description**

DOMAINE TECHNIQUE GENERAL

La présente invention concerne un système de type chauffe-eau à capacité énergétique modulable.

ETAT DE L'ART

Le « mix énergétique » désigne la répartition des différentes sources consommées pour la production d'énergie électrique. Ce mix énergétique, en constante évolution, voit la progression constante des Energies Renouvelables, ce qui entraîne un besoin accru en flexibilités du système.

Ces dernières, représentées essentiellement par l'éolien et le photovoltaïque, ne permettent en effet pas une production constante et régulée au contraire d'une centrale nucléaire, d'où des problèmes de variabilité et de prévisibilité de la production associée. Cela fait que les aléas de très court terme vont fortement augmenter.

D'autre part, des problèmes locaux de qualité de fourniture électrique vont être amplifiés du fait d'une répartition géographique inhomogène des installations, avec par exemple plutôt du photovoltaïque dans le Sud et de l'éolien dans le Nord.

Il apparait essentiel de trouver des solutions de pilotage de la charge associée en vue de maitriser l'aléa lié aux Energies Renouvelables et de satisfaire les contraintes du réseau électrique au sens large.

Il a par exemple été proposé la charge de batteries stationnaires pour faciliter l'insertion massive de panneaux photovoltaïques (démonstrateur « NiceGrid »). Toutefois, les coûts d'investissement élevés ne permettent pas d'envisager un déploiement à grande échelle de cette solution alternative. Il est également prévu d'agir sur la puissance réactive

Alternativement au stockage via batteries, il est possible de stocker l'énergie thermiquement. Avec près de 12 millions d'unités installées en France dont plus de 80% sont asservies au signal tarifaire Heures Pleines/Heures creuses (HP/HC), le parc de Chauffe-Eau Joule (CEJ) à accumulation résidentiel - utilisé aujourd'hui pour le lissage journalier de la courbe de charge - est susceptible de répondre à ces nouveaux enjeux.

La demande de brevet US 2009/0188486 propose à ce titre des chauffe-eau alimentés en courant continu par des modules photovoltaïques. Le système est configuré pour maximiser la fraction solaire, c'est-à-dire minimiser la consommation d'électricité soutirée du réseau tout en maintenant le confort pour l'utilisateur.

Ce système apporte satisfaction, mais ne résout que partiellement le problème : il peut tout à fait y avoir un jour avec un excédent d'énergie électrique issu du panneau photovoltaïque, et le jour suivant avec un temps couvert rendant nécessaire la consommation d'une autre source d'électricité. De plus le système est complexe et n'est utilisable que dans des habitations équipées d'un panneau solaire.

On connait des techniques dites « d'effacement diffus » décrites par exemple dans la demande WO2012/172193, qui permettent de couper automatiquement un équipement électrique tel qu'un radiateur en cas de pic de consommation énergétique. Toutefois, ces techniques n'apportent aucune solution en cas de pic de production d'origine photovoltaïque, et peuvent altérer le confort des usagers.

La demande EP2610999 propose un système de chauffe-eau selon le préambule de la revendication indépendante 1, régulé en puissance pour consommer l'excès d'énergie renouvelable produite localement par exemple par un panneau solaire, grâce à un régulateur de type thyristor. On constate cependant que ce système ne respecte pas les normes de compatibilité électroniques si la puissance électrique de chauffage est trop importante.

Ainsi, aujourd'hui, aucune solution satisfaisante n'est disponible pour piloter à grande échelle et efficacement la charge liée aux énergies électriques d'origine renouvelable. Il serait souhaitable de disposer d'une manière d'utiliser la capacité de stockage des chauffe-eau joule qui soit facilement déployable, efficace et peu couteuse.

PRESENTATION DE L'INVENTION

L'invention propose de pallier ces inconvénients en proposant selon un premier aspect un système selon la revendication 1, comprenant :

- un dispositif de chauffage, le dispositif comprenant une pluralité de moyens de chauffage alimentés par un réseau électrique ;
- un module de contrôle dudit dispositif de chauffage ;

chaque moyen de chauffage étant alimenté via un actionneur de puissance dont au moins un est un gradateur, chaque actionneur de puissance étant contrôlé par le module de contrôle en fonction d'au moins des données descriptives d'un état dudit réseau électrique, de sorte à réguler en puissance le moyen de chauffage associé audit actionneur de puissance.

Le dispositif selon l'invention est avantageusement complété par les caractéristiques suivantes, prises seules ou en une quelconque de leur combinaison techniquement possible :

- le système comprend en outre un réservoir d'eau, le dispositif de chauffage chauffant l'eau du réservoir ;
- le système comprend en outre un élément de gestion configuré pour contrôler le module de contrôle en fonction desdites données descriptives d'un état dudit réseau électrique ;
- le module de contrôle contrôle chaque actionneur de puissance en fonction d'une consigne de puissance émise par l'élément de gestion ;

- l'élément de gestion est configuré pour émettre une consigne de puissance diminuant la consommation des moyens de chauffage lorsque les données descriptives d'un état dudit réseau électrique sont caractéristiques d'un déficit actuel et/ou d'une surabondance future d'énergie d'origine renouvelable au sein dudit réseau électrique, de sorte à diminuer la capacité énergétique du réservoir d'eau ;

- le module de contrôle est configuré pour ignorer la consigne de puissance lorsqu'une température de l'eau du réservoir est inférieure à un premier seuil prédéfini ;

- l'élément de gestion est configuré pour émettre une consigne de puissance augmentant la consommation des moyens de chauffage lorsque les données descriptives d'un état dudit réseau électrique sont caractéristiques d'une surabondance actuelle et/ou d'un déficit futur d'énergie d'origine renouvelable au sein dudit réseau électrique, de sorte à augmenter la capacité énergétique du réservoir d'eau ;

- le module de contrôle est configuré pour ignorer la consigne de puissance lorsqu'une température de l'eau du réservoir est supérieure à un deuxième seuil prédéfini ;

- le système comprend en outre un boitier recevant lesdites données descriptives d'un état dudit réseau électrique depuis un réseau de communication, le boitier étant connecté audit élément de gestion ou au module de contrôle ;

- le moyen de chauffage alimenté via le gradateur présente une puissance nominale inférieure à 1.2 kW ;

- au moins un actionneur de puissance est un relais.

- chaque actionneur de puissance est un gradateur ou un relais ;

- exactement un actionneur de puissance est un gradateur ;

- les moyens de chauffage sont n résistances de résistance R égale disposées sur des branches en parallèle ;

- le module de contrôle est configuré pour déterminer des ratios de puissance $K_g \in [0; 1]$ et $A_{i,i \in [1,n]} \in \{0;1\}$ associés respectivement au gradateur et aux $n-1$ relais, tels que $Pc = \left( K_g + \sum_{i=1}^{n-1} A_i \right) * U^2 / R$ avec $Pc$ la puissance de consigne et $U$ la tension aux bornes de chacune des branches en parallèle.

Selon un deuxième aspect, l'invention concerne un procédé de modification de la consommation d'un dispositif de chauffage électrique selon la revendication 16, le procédé comprenant des étapes de :

- réception de données descriptives d'un état d'un réseau électrique ;

- génération par un élément de gestion d'une consigne de puissance en fonction d'au moins lesdites données descriptives d'un état dudit réseau électrique ;

- émission de ladite consigne à destination d'un module de contrôle d'une pluralité de moyens de chauffage du dispositif de chauffage, chaque moyen de chauffage étant alimenté par le réseau électrique via un actionneur de puissance dont au moins un est un gradateur ;

- contrôle par le module de contrôle de chaque actionneur de puissance en fonction de la consigne de puissance de sorte à réguler en puissance les moyens de chauffage.

PRESENTATION DES FIGURES

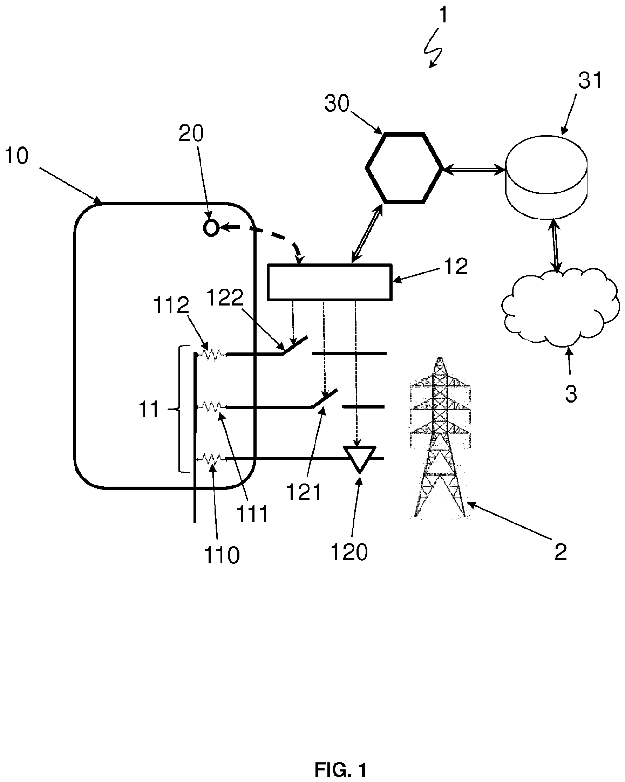

D'autres caractéristiques, buts et avantages de l'invention ressortiront de la description qui suit, qui est purement illustrative et non limitative, et qui doit être lue en regard de la figure 1 annexée et sur laquelle est représenté un schéma d'un mode de réalisation préféré du système selon l'invention.

DESCRIPTION DETAILLEE

*Architecture générale*

La **figure 1** représente l'architecture générale d'un mode de réalisation préféré du système 1 selon l'invention. Ce système est essentiellement constitué d'un ou plusieurs dispositifs de chauffage 11 comprenant une pluralité de moyens de chauffage 110, 111, 112 alimentés par un réseau électrique 2.

Ces dispositifs de chauffage 11, ou « émetteurs », sont typiquement des radiateurs domestiques. Un moyen de chauffage par effet Joule 110, 111, 112 est typiquement une ou plusieurs résistances électriques, qui chauffent de l'air ou un fluide caloporteur (par exemple de l'huile), en échange thermique avec un milieu à chauffer tel que l'air d'une pièce d'un logement. En outre, deux dispositifs 11 peuvent en fait faire partie d'un même émetteur.

De façon préférée, le fluide chauffé est de l'eau (en particulier l'eau d'un réservoir 10), et le système est ainsi un Chauffe-Eau Joule (CEJ) domestique (44% des habitats en sont équipés). Dans la suite de la présente description, on prendra l'exemple d'un système de type chauffe-eau, mais on comprendra que l'invention n'est pas limitée à ces derniers, et s'applique à tout système comprenant au moins un dispositif de chauffage 11.

Le système 1 configuré en CEJ comprend ainsi :

- un réservoir d'eau 10 (communément appelé « ballon » d'eau chaude);

- un dispositif de chauffage 11 de l'eau du réservoir 10, le dispositif 11 comprenant une pluralité de moyens de chauffage 110, 111, 112 alimentés par un réseau électrique 2 ;

- typiquement une sonde de température 20 configurée pour émettre un signal représentatif de la température de l'eau du réservoir 10 ;
- un module de contrôle 12 dudit dispositif de chauffage 11 en fonction dudit signal émis par la sonde 20.

Les moyens de chauffage électrique du dispositif de chauffage sont en particulier des moyens de chauffage par effet Joule, c'est-à-dire généralement des résistances, d'où le chauffage de l'eau par effet joule. Alternativement, un ou plusieurs de ces moyens 110, 111, 112 peut être une pompe à chaleur complète dont la source chaude est en échange thermique avec l'eau du réservoir 10 (et la source froide en échange thermique par exemple avec l'air extérieur), de sorte à permettre un chauffage de l'eau avec une efficacité supérieure à 100%.

De façon préférée, le dispositif 11 est intégralement électrique (il ne comprend ainsi que des moyens de chauffage alimentés par le réseau 2, et pas de bruleurs à gaz par exemple). L'énergie de chauffage fournie à l'eau est alors entièrement d'origine électrique. Le système n'est toutefois pas limité à cette configuration et le dispositif 11 peut alternativement comprendre en outre un moyen de chauffage alternatif (non-électrique) tel qu'un bruleur, un échangeur avec un collecteur solaire, etc.

De façon particulièrement préférée, le dispositif 11 est composé de n résistances équivalentes de résistance R, comme on le verra plus loin.

Le réseau 2 est un réseau à grande échelle qui relie une pluralité de sources électriques. Comme expliqué précédemment, il s'agit à la fois d'énergie d'origine non-renouvelable (nucléaire et/ou fossile) et d'énergie d'origine renouvelable (solaire, éolien, etc.). L'énergie d'origine renouvelable présente des problèmes de variabilité et de prévisibilité, alors que l'énergie d'origine non-renouvelable est d'une meilleure disponibilité.

Dans l'hypothèse où l'utilisateur du système 1 comprend une source personnelle d'énergie d'origine renouvelable (par exemple des panneaux photovoltaïques de toit) on comprend que le réseau 2 englobe à la fois le réseau électrique global et le réseau électrique local de l'utilisateur (en d'autres termes que les centrales distantes et les panneaux solaires locaux peuvent aussi bien, l'un que l'autre, alimenter le dispositif de chauffage 11).

Le système 1 est dans un mode de fonctionnement « normal » régulé en température. Pour cela, il comprend avantageusement une ou plusieurs sondes de température 20 et un module de contrôle 12 du dispositif de chauffage 11. La ou les sondes 20 envoient en permanence ou par intermittence un signal représentatif de la température de l'eau du réservoir 10. Ce signal peut être un envoi de données représentant numériquement la température, ou un signal électrique dont un paramètre est fonction de la température.

Le module de contrôle 12 est typiquement une carte électronique qui déclenche ou non le chauffage en fonction de la température de l'eau et de nombreux autres paramètres éventuels (programmation, saison, plages horaires, heures creuses/heures pleines, usages habituels de l'utilisateur, etc.).

De façon générale, un chauffe-eau Joule comprend le plus souvent deux températures de seuil (dont la valeur peut varier selon le moment et des réglages personnels) : une première température de seuil qui est la température « minimale » et une deuxième température de seuil qui est la température « maximale » (le premier seuil est inférieur au deuxième seuil). Ces deux seuils sont quelques degrés autour (par exemple +/- 4°C) d'une température de « confort » qui est la température moyenne souhaitée, réglée par l'utilisateur (l'intervalle 50-65°C est courant).

Le module de contrôle 12 est ainsi configuré pour activer le dispositif de chauffage 11 lorsque le signal reçu est représentatif d'une température inférieure au premier seuil prédéfini, et/ou configuré pour désactiver le dispositif de chauffage 11 lorsque le signal reçu est représentatif d'une température supérieure au deuxième seuil prédéfini.

Ainsi, tant que le dispositif de chauffage 11 est arrêté et que l'on est entre les deux seuils rien ne se passe. Si la température baisse (avec le temps ou parce que l'utilisateur tire de l'eau chaude) et passe en-dessous du premier seuil, le dispositif de chauffage 11 est activé, et ce jusqu'à atteindre le deuxième seuil (température maximale, supérieure au premier seuil). La température se remet ensuite à baisser, etc. En d'autres termes, il y a une alternance de phases de « refroidissement » pendant lesquelles la température descend du deuxième seuil au premier seuil (voir au-delà si l'utilisateur continue d'utiliser de l'eau chaude), et de phases de « chauffe » pendant lesquelles la température monte sous l'effet du dispositif 11 allumé d'une température inférieure ou égale au premier seuil jusqu'au deuxième seuil.

Comme expliqué avant, cette configuration peut dépendre d'autres paramètres, et il peut y avoir plus de deux seuils, éventuellement mobiles, par exemple de façon à optimiser la consommation d'énergie pendant les heures creuses (les chauffe-eau sont souvent prévus pour remonter l'eau en température préférentiellement au petit matin, de sorte à maximiser l'utilisation des heures creuses et avoir de l'eau chaude en quantité au moment de se doucher).

En pratique, les premier et deuxième seuils sont souvent la conséquence d'un phénomène d'hystérésis autour d'une valeur médiane, qui définit ces deux seuils. L'écart induit est alors d'environ 3°C.

La présente invention n'est limitée à aucune configuration en particulier, on comprendra que, de façon générale, le module de contrôle 12 régule la température du réservoir 10 via l'activation/désactivation du dispositif de chauffage 11 en fonction de signaux qui lui sont émis, signaux pouvant représenter des températures et/ou des consignes de fonctionnement.

*Actionneurs de puissance*

Chaque moyen de chauffage 110, 111, 112 est alimenté via un actionneur de puissance 120, 121, 122. Cela signifie que chaque moyen de chauffage 110, 111, 112 est disposé en série avec au moins un actionneur de puissance 120, 121, 122.

Chaque moyen de chauffage 110, 111, 112 est associé de manière unique avec un actionneur de puissance 120, 121, 122 qui lui est dédié, ce qui peut se traduire par le fait d'avoir, comme on le voit sur la figure 1, n branches en parallèle, chaque branche comprenant un moyen de chauffage 110, 111, 112 et un actionneur de puissance 120, 121, 122 en série.

Chaque actionneur de puissance 120, 121, 122 est un composant permettant de modifier la puissance du moyen de chauffage 110, 111, 112 auquel il est associé. En particulier, un actionneur de puissance modifie l'intensité et/ou la tension (en particulier seulement la tension) du courant sur la branche de sorte à doser la puissance effective consommée par le moyen de chauffage 110, 111, 112 associé entre 0 et 100% de sa valeur nominale (i.e. sa puissance maximale). En d'autres termes, à chaque moyen de chauffage de puissance nominale $P_i$ est associée une puissance effective $Peff_i = A_i * P_i$, où $A_i$ est un ratio de puissance de l'actionneur, compris entre 0 et 1.

On connait de nombreux actionneurs de puissance, mais ils sont en particulier soit de type relais, soit de type convertisseur (dont le gradateur).

Par relais (actionneurs de puissance 121 et 122 sur la figure 1), on entend un dispositif en fonctionnement tout-ou-rien, i.e. un interrupteur. Le ratio de puissance $A_i$ associé vaut 0 (état ouvert) ou 1 (état passant). Un relais peut être classiquement électromécanique, mais également à semi-conducteurs (voir plus loin).

Par convertisseur (actionneur de puissance 120 sur la figure 1), on entend un dispositif capable de modifier un signal électrique dans le but de faire varier sa tension de sortie de façon continue (et non pas discrète comme pour un relais). Le ratio de puissance associé $A_i$ est à valeur dans l'intervalle [0; 1] (on utilise alors plutôt la notation $K_g$ pour le ratio de puissance d'un gradateur).

Un gradateur est un type de convertisseur basé sur des composants appelés « thyristors » (des interrupteurs électroniques semi-conducteurs) commandés via un signal, utilisé sur du courant alternatif. Il peut être défini comme un convertisseur direct alternatif-alternatif, par opposition à des convertisseurs mettant en œuvre une conversion alternatif-continu (et le cas échéant par la suite une conversion continu-alternatif). On connait de nombreux types de gradateur, le plus souvent utilisant un triac (c'est à dire deux thyristors montés tête-bêche en parallèle) commandé par un circuit dédié. Par exemple, dans un gradateur à « commande par angle de phase », le triac autorise le passage du courant durant un temps plus ou moins long de la demi-période. Ce temps est défini par le rapport cyclique qui est le rapport du temps de fermeture divisé par la demi-période, il est donc compris entre 0 et 1. Quand il est égal à 0 la tension de sortie est quasiment nulle et quand il est égal à 1 la tension de sortie est la même que celle de l'entrée (du réseau). Le signal de commande du triac, appelé angle de retard à l'ouverture, doit être synchrone avec la tension aux bornes du triac lui-même.

On notera que, bien qu'existent des relais statiques à semi-conducteurs y compris thyristors/triac, ces derniers ne doivent pas être confondus avec des gradateurs. Un tel relais statique à semi-conducteurs ne comprend en effet pas de circuit capable d'émettre un signal de commande synchrone, et est ainsi seulement capable de rendre passant ou non le semi-conducteur. On comprendra donc que dans la présente description le terme relais désigne uniquement un actionneur tout-ou-rien (le passage d'un état à l'autre est discontinu), et donc qu'un convertisseur n'est pas un relais.

A titre illustratif, on citera la demande EP0104979 qui décrit un chauffe-eau équipé de semi-conducteurs de type triac utilisés comme actionneurs de puissance commutés (à une heure prédéterminée de la journée) : dans un premier mode de réalisation, l'unique moyen de chauffage est alimenté via un gradateur (triac commandé en phase par un circuit dédié), et dans un deuxième mode de réalisation, deux moyens de chauffage sont alimenté chacun via un relais (deux triac statiques). L'objectif de cette demande est uniquement d'étaler dans le temps une hausse de puissance.

Dans le présent système, les actionneurs de puissance permettent de réguler en puissance le dispositif de chauffage 11 en fonction de données descriptives d'un état dudit réseau électrique 2 (voir plus loin). Pour cela, chaque actionneur de puissance 120, 121, 122 est contrôlé par le module de contrôle 12 de sorte à réguler en puissance le moyen de chauffage 110, 111, 112 associé audit actionneur de puissance 120, 121, 122. Par contrôle, on entend que le module de contrôle 12 est adapté pour déterminer et imposer les ratios de puissance $A_i$ des actionneurs de puissance 120, 121, 122 en fonction des consignes qu'il reçoit.

Le système selon l'invention se distingue en ce qu'au moins un actionneur de puissance 120, 121, 122 est un gradateur 120. De façon préférée, au moins un autre actionneur de puissance 120, 121, 122 est un relais 121, 122. De façon particulièrement préférée, exactement un actionneur de puissance 120, 121, 122 est un gradateur 120 et tous les autres sont des relais 121, 122. Comme on le verra plus loin, une telle configuration présente un double avantage : il devient possible de réguler facilement et simplement en puissance le dispositif de chauffage 11 en pouvant le faire fonctionner à n'importe quelle puissance entre 0 et la puissance nominale maximum (c'est-à-dire la somme des puissances nominales des différents moyens de chauffage 110, 111, 112), et ce tout en limitant les harmoniques.

En effet, des tests mis en œuvre pour la Demanderesse ont montré que tant que la puissance aux bornes du gradateur 120 (puissance nominale du moyen de chauffage 110 associé) n'excède pas 1.2 kW les harmoniques restent acceptables et le système répond aux exigences des normes de Compatibilité Électromagnétique (CEM). Et l'utilisation combinée du gradateur 120 avec des relais 121, 122 permet n'importe quelle puissance nominale totale (y compris dépassant largement 1.2 kW) sans que le moyen de chauffage 110 alimenté via le gradateur 120 ne présente une puissance nominale supérieure à 1.2 kW. Cela permet tous les avantages du gradateur (simplicité, robustesse et bon marché) à n'importe quel niveau de puissance sans risque de fortes harmoniques.

Le mécanisme de régulation en puissance permet ainsi d'utiliser les chauffe-eau installés pour gérer la production électrique d'origine renouvelable, et ce facilement et efficacement : la modification de la puissance effective des moyens de chauffage 110, 111, 112 permet en effet d'augmenter ou de diminuer sur commande la consommation de ces chauffe-eau et de jouer sur l'énergie stockée en tant qu'eau chaude. La capacité énergétique devient modulable. Plusieurs TWh sont ainsi disponibles à l'échelle du territoire français par exemple.

Ceci permet par exemple de privilégier la consommation électrique tant que le photovoltaïque est largement disponible, et de limiter la consommation électrique ou se rabattre sur d'autres énergies (par exemple via des moyens de chauffage alternatifs tels des bruleurs si le dispositif 11 en comprend), lorsque le photovoltaïque est déficitaire.

Par exemple, pendant une phase de chauffe de l'eau (et donc de remontée en température du réservoir 10), la puissance peut être augmentée, ce qui chauffe plus vite l'eau. Ainsi, davantage d'électricité est consommée, cette électricité étant stockée sous forme de capacité calorifique de l'eau (4185 $J.kg^{-1}.K^{-1}$).

Par capacité énergétique du réservoir 10, on entend en effet la quantité maximale d'énergie stockable sous forme thermique via l'eau chaude.

*Mécanisme de gestion*

Les données descriptives de l'état du réseau électrique 2 peuvent être transmises directement au module de contrôle 12. Mais de façon préférée, le module de contrôle est un équipement standard, et le système 1 comprend en outre un élément de gestion 30 connecté au module de contrôle 12. Cet élément de gestion 30 est configuré pour contrôler le module de contrôle 12 en fonction d'au moins des données descriptives d'un état dudit réseau électrique 2.

En d'autres termes, l'élément de gestion 30 agit comme un module de pré-traitement des données descriptives de l'état du réseau 2.

L'élément de gestion 30 s'intègre à un module de contrôle 12 d'un CEJ existant, et ne nécessite pas de modification structurelle. En particulier, il n'y a que peu de modifications du module de contrôle 12 qui ne réalise qu'un « post-traitement » (on verra plus loin en quoi il consiste). Il est ainsi facile et peu coûteux de modifier les équipements existants. Dans le cas de chauffe-eau neufs, l'élément de gestion 30 peut être directement intégré au module de contrôle 12 comme une fonction supplémentaire afin d'éliminer la nécessité de boitier supplémentaire (en d'autres termes le module de contrôle 12 traite directement les données descriptives de l'état du réseau électrique 2).

Ces données désignent de façon générale toutes les informations sur la charge du réseau 2, le taux d'énergie d'origine renouvelable, les prévisions de variation de ce taux, la production/consommation en général, etc.

Ces données peuvent être des données génériques obtenues localement, par exemple d'origine météorologique, qui peuvent indiquer dans quelle mesure les moyens de production d'énergie renouvelable vont être productifs, mais de façon préférée il s'agit de données plus complexes fournies depuis un réseau de communication 3 (typiquement le réseau internet) via un boitier 31, en particulier en temps réel.

Dans un premier mode de réalisation, le boitier 31 est un compteur électrique intelligent (par exemple LINKY) disposant d'un émetteur Télé-Information Client (TIC) intégré ou non. Les données utilisées peuvent notamment être les champs de la TIC tels que par exemple : l'état binaire d'un ou plusieurs contact(s) virtuel(s), l'index tarifaire de la grille fournisseur et/ou distributeur en cours, le prix de l'électricité, le préavis de pointe mobile et/ou une ou plusieurs pointe(s) mobile(s), etc.

Dans un deuxième mode de réalisation, le boitier 31 est un équipement d'accès à internet de type « box » d'un fournisseur d'accès à Internet. Le boitier 31 est connecté à l'élément de gestion 30 par des moyens de connexion réseau tels que le Wi-Fi, une liaison Ethernet, le CPL, etc., les données peuvent être alors des données météorologiques complètes (vitesse du vent, ensoleillement, etc.), des données pré-traitées sur des serveurs d'un fournisseur d'électricité pour optimiser la charge globale, etc.

Dans un troisième mode de réalisation, le boitier 31 est un gestionnaire d'énergie connecté via une liaison filaire/radio à un ou plusieurs compteurs électriques associés à des points de production d'énergie d'origine renouvelable (en particulier si l'énergie d'origine renouvelable a un ou plusieurs points de livraison locaux dédiés). La liaison peut être mono ou bidirectionnelle. L'accès à des compteurs permet un suivi en temps réel complet de la production d'énergie d'origine photovoltaïque et de la consommation du ou des logements.

La présente invention n'est ni limitée à un type de données descriptives d'un état dudit réseau électrique 2, ni à une manière de fournir ces données.

*Modes suralimentation et sous-alimentation*

Selon un mode de réalisation préféré, l'élément de gestion 30 détermine une consigne de puissance (c'est-à-dire une valeur cible de puissance effective) en fonction des données descriptives de l'état du réseau 2. Le module de contrôle 12 contrôle alors chaque actionneur de puissance en fonction d'une consigne de puissance émise par l'élément de gestion 30.

En particulier, l'élément de gestion met en œuvre un premier et/ou un deuxième type de fonctionnement.

Le premier est le mode « suralimentation » (en d'autres termes « marche forcée ») utilisé pour augmenter la consommation du CEJ et donc la quantité d'énergie stockée. Dans ce mode, l'élément de gestion 30 est configuré pour émettre une consigne d'augmentation de puissance (en d'autres termes une consigne de puissance augmentant la consommation des moyens de chauffage 110, 111, 112) lorsque les données descriptives d'un état dudit réseau électrique 2 sont caractéristiques d'une surabondance actuelle et/ou d'un déficit futur d'énergie d'origine renouvelable au sein dudit réseau électrique 2 (en d'autres termes si la production d'origine renouvelable est à la baisse à court terme), de sorte à augmenter la capacité énergétique du réservoir d'eau 10.

Ce mode suralimentation est intéressant soit pour absorber une forte production de photovoltaïque, soit pour prévenir une faible production. Grâce à la suralimentation, l'effet du dispositif 10 est amplifié. Cela augmente donc la consommation immédiate, mais retarde la consommation à venir (puisque plus d'énergie est stockée, le prochain franchissement du premier seuil de température est retardé).

La valeur de la consigne de puissance peut être telle à consommer au maximum le surplus d'énergie d'origine renouvelable sans toucher à l'énergie d'origine non renouvelable. La valeur peut également être une valeur fixe, ou la valeur actuelle de consommation plus un écart prédéterminé (par exemple +500W).

Il est à noter que ce mode suralimentation peut être complété de certaines options : si les données déclenchant la suralimentation sont fournies par un compteur équipé d'un module TIC, ce dernier peut augmenter temporairement et simultanément à l'enclenchement du chauffe-eau la valeur de la puissance de coupure pour éviter tout risque de disjonction en absence de délesteur ou de gestionnaire d'énergie. De plus, si le système de chauffage de l'eau est asservi au signal tarifaire via un contact sec ou virtuel, ce dernier devra être piloté de manière à permettre l'alimentation électrique de ce système en dehors des plages normales autorisées si nécessaire. En outre, si les points de soutirage d'eau chaude sanitaire (douche, robinets, etc.) en aval ne sont pas tous équipés de mitigeur, l'ajout d'une vanne de mélange en sortie du réservoir 10 permet d'éviter les risques de brûlure dus à la fourniture d'eau plus chaude.

Le deuxième mode est le mode « sous-alimentation » (en d'autres termes « marche réduite ») utilisé pour diminuer la consommation du CEJ et donc la quantité d'énergie stockée. Dans ce mode, l'élément de gestion 30 est configuré pour émettre une consigne de diminution de puissance (en d'autres termes une consigne de puissance diminuant la consommation des moyens de chauffage 110, 111, 112), lorsque les données descriptives d'un état dudit réseau électrique 2 sont caractéristiques d'un déficit actuel et/ou d'une surabondance future d'énergie d'origine renouvelable au sein dudit réseau électrique 2 (en d'autres termes si la production d'origine renouvelable est à la hausse à court terme), de sorte à diminuer la capacité énergétique du réservoir d'eau 10.

Cela peut être très utile en prévision d'un pic de production d'énergie d'origine renouvelable ou lors d'un pic de consommation. On évite ainsi de consommer de l'énergie fossile alors que l'on sait que l'énergie renouvelable sera bientôt trop abondante. Cette baisse volontaire de consommation est appelée effacement.

La consigne de baisse de puissance peut être calculée de sorte à minimiser une consommation d'énergie d'origine non-renouvelable. L'idée est de ne pas (ou le moins possible) soutirer d'énergie d'origine non-renouvelable au réseau 2. Ce peut être également une valeur fixe, ou la valeur actuelle de consommation moins un écart prédéterminé (par exemple -500W).

Il est à noter que les deux modes (marche réduite et marche forcée) peuvent cohabiter et être mis en œuvre à tour de rôle. Dans l'un comme dans l'autre, l'application de la consigne de puissance peut être précédée et/ou suivie d'une rampe pour éviter un effet rebond, en d'autres termes on augmente/diminue progressivement la consigne de puissance (par exemple linéairement sur un intervalle de 30 minutes), au lieu de basculer immédiatement.

Par ailleurs, l'activation de l'un ou l'autre des modes, le choix d'une consigne de puissance fixe ou variable, les seuils de températures, etc., peuvent être contrôlés par l'utilisateur via une interface adaptée.

Il est également à noter que la régulation en puissance ne peut pas se faire au détriment du confort de l'utilisateur, et pour chacun des modes, le module de contrôle 12 peut être configuré pour ignorer la consigne de puissance lorsqu'une température de l'eau du réservoir 10 (mesurée par une sonde 20 connectée au module de contrôle 12) est inférieure au premier seuil prédéfini (pour le deuxième mode) ou supérieure à un deuxième seuil prédéfini (pour le premier mode).

*Fonctionnement de l'élément de gestion*

L'élément de gestion 30 peut comprendre un module de traitement de données (un processeur) configuré pour recevoir desdites données descriptives d'un état dudit réseau électrique 2 et générer à destination du module de contrôle 12 la consigne de puissance. Si le module de contrôle 12 est une carte électronique évoluée comprenant déjà un processeur, l'élément de gestion 30 peut être, comme expliqué, un module logiciel directement mis en œuvre par le module de contrôle12.

*Pilotage des actionneurs de puissance*

Comme expliqué, le module de contrôle 12 détermine les ratios de puissance $A_i$ des actionneurs de puissance 120, 121, 122 en fonction de la consigne de puissance qu'il reçoit. En d'autres termes, il calcule les valeurs de ces ratios à choisir tels que la puissance effective corresponde à la consigne de puissance. De nombreux algorithmes peuvent être utilisés pour déterminer ces valeurs.

Il est à noter que leur calcul est particulièrement aisé dans le cas où exactement un actionneur de puissance 120, 121, 122 est un gradateur 120 et tous les autres sont des relais 121, 122. Dans un tel cas, si les moyens de chauffage par effet Joule 110, 111, 112 sont n résistances de résistance R égale disposées sur des branches en parallèle, alors la puissance nominale de chaque résistance est donnée par la formule P = $U^2/R$, et la puissance nominale maximale du dispositif 11 par la formule $Pmax = n * U^2/R$ (avec U la tension aux bornes de chacune des branches en parallèle). Typiquement, R $\geq$ 500, de sorte à vérifier la condition $U^2/R < 1.2kW$ pour limiter les harmoniques (on rappelle que la tension imposée en France est 230V). La valeur de n est par ailleurs fixée de sorte à atteindre la puissance nominale maximale souhaitée sans risque d'harmoniques : comme expliqué, $n \geq \lfloor Pmax/1.2kw \rfloor + 1$.

La puissance effective totale vaut alors

$$Peff = \left(K_g + \sum_{i=1}^{n-1} A_i\right) * U^2/R.$$ En imposant

Peff=Pc (avec $Pc$ la puissance de consigne reçue, $Pc \leq n * U^2/R$. Si la puissance de consigne est supérieure à la puissance nominale maximale il peut être décidé que la valeur de la puissance de consigne est remplacée par cette puissance nominale maximale), on obtient

$$K_g + \sum_{i=1}^{n-1} A_i = \frac{Pc*R}{U^2}.$$ Cette équation est facile à résoudre : il suffit de diviser $\frac{Pc*R}{U^2}$ par $n$ : la partie entière vaut $\sum_{i=1}^{n-1} A_i$, c'est-à-dire le nombre de relais 121, 122 fermés et la partie décimale est la valeur de $K_g$.

L'utilisation d'un unique gradateur 120 offre ainsi une fonction injective : il existe au moins une configuration d'actionneurs facilement identifiable pour toute puissance de consigne.

On note qu'il est tout à fait possible d'avoir des résistances de valeurs différentes (même si dans ce cas certaines puissances de consignes peuvent ne pas être applicables), avec un seul gradateur 120 le calcul reste facile.

Dans l'exemple représenté sur la figure 1, avec 3 résistances identiques R1=R2=R3=R :

La puissance nominale maximale est : Pmax = 3*$U^2$/R

- Pour une consigne P < Pmax/3, les deux circuits relais 121, 122 sont ouverts et un signal de commande est appliqué au gradateur 120 pour fournir la puissance P demandée ;
- Pour une consigne Pmax/3 $\leq$ P < 2*Pmax/3, seul un circuit relais 121, 122 est ouvert et un signal de commande est appliqué au gradateur 120 pour fournir la puissance P- Pmax/3 ;
- Pour une consigne P $\geq$ 2*Pmax/3, les deux circuits relais 121, 122 sont fermés et un signal de commande est appliqué au gradateur 120 pour fournir la puissance P-2*Pmax/3.

Cette architecture à trois résistances est particulièrement adaptée pour tout dispositif 11 d'une puissance allant jusqu'à 3kW (ce qui est le cas de la plupart des CEJ grand public).

*Procédé*

Selon un deuxième aspect, l'invention concerne également un procédé de modification de la consommation d'un dispositif de chauffage 11 électrique selon la revendication 16 (il s'agit plus précisément d'un procédé de modification de la capacité énergétique d'un réservoir d'eau 10 si le système 1 est un chauffe-eau) mis en œuvre par le système 1 selon le premier aspect de l'invention.

Ce procédé comprend des étapes de :

- réception de données descriptives d'un état d'un réseau électrique 2 (comme expliqué par exemple depuis un boitier 31);
- génération par un élément de gestion 30 d'une consigne de puissance en fonction d'au moins lesdites données descriptives d'un état dudit réseau électrique 2 ;
- émission de ladite consigne à destination d'un module de contrôle 12 d'une pluralité de moyens de chauffage 110, 111, 112 du dispositif de chauffage 11 (en particulier un dispositif de chauffage 11 de l'eau du réservoir 10, mais on comprendra que si le système 1 est un système de chauffage conventionnel, le dispositif 11 peut chauffer l'air ambiant ou un autre fluide), chaque moyen de chauffage 110, 111, 112 étant alimenté par le réseau électrique 2 via un actionneur de puissance (120, 121, 122) dont au moins un est un gradateur 120 (et avantageusement tous les autres sont des relais 121, 122) ;
- contrôle par le module de contrôle 12 de chaque actionneur de puissance 120, 121, 122 en fonction de la consigne de puissance de sorte à réguler en puissance les moyens de chauffage 110, 111, 112 (cette étape consiste en la détermination des ratios de puissance $A_i$)

On rappelle que l'élément de gestion 30 peut en fait être seulement une fonctionnalité intégrée au module de contrôle 12 (qui reçoit alors directement les données descriptives de l'état du réseau 2).

Selon le premier mode de fonctionnement décrit précédemment, le système 1 est en mode « suralimentation ». Ce mode est déclenché lorsque les données descriptives d'un état dudit réseau électrique 2 sont caractéristiques d'une surabondance actuelle et/ou d'un déficit futur d'énergie d'origine renouvelable au sein dudit réseau électrique 2.

La consigne de puissance est une consigne d'augmentation de la consommation des moyens de chauffage 110, 111, 112, de sorte à augmenter la capacité énergétique du réservoir 10.

Selon le deuxième mode de fonctionnement décrit précédemment, le système 1 est en mode « sous-alimentation ». Ce mode est déclenché lorsque les données descriptives d'un état dudit réseau électrique 2 sont caractéristiques d'un déficit actuel et/ou d'une surabondance future d'énergie d'origine renouvelable au sein dudit réseau électrique 2.

La consigne de puissance est alors une consigne de diminution de la consommation des moyens de chauffage 110, 111, 112, de sorte à diminuer la capacité énergétique du réservoir 10.

**Revendications**

1. Système (1) comprenant :

   - un dispositif de chauffage (11), le dispositif (11) comprenant une pluralité de moyens de chauffage (110, 111, 112) alimentés par un réseau électrique (2) ;
   - un module de contrôle (12) dudit dispositif de chauffage (11) ;

   chaque moyen de chauffage (110, 111, 112) étant alimenté via un actionneur de puissance (120, 121, 122), chaque actionneur de puissance (120, 121, 122) étant contrôlé par le module de contrôle (12) en fonction d'au moins des données descriptives d'un état dudit réseau électrique (2), de sorte à réguler en puissance le moyen de chauffage (110, 111, 112) associé audit actionneur de puissance (120, 121, 122), le système étant **caractérisé en ce que** chaque actionneur de puissance (120, 121, 122) est associé de manière unique au moyen de chauffage (110, 111, 12) qu'il alimente, et **en ce que** au moins un actionneur de puissance (120, 121, 122) est un gradateur (120).

2. Système selon la revendication 1, comprenant en outre un réservoir d'eau (10), le dispositif de chauffage (11) chauffant l'eau du réservoir (10).

3. Système selon l'une des revendications 1 et 2, comprenant en outre un élément de gestion (30) configuré pour contrôler le module de contrôle (12) en fonction desdites données descriptives d'un état dudit réseau électrique (2).

4. Système selon la revendication 3, dans lequel le module de contrôle (12) contrôle chaque actionneur de puissance (120, 121, 122) en fonction d'une consigne de puissance émise par l'élément de gestion (30).

5. Système selon les revendications 2 et 4 en combinaison, dans lequel l'élément de gestion (30) est configuré pour émettre une consigne de puissance diminuant la consommation des moyens de chauffage (110, 111, 112) lorsque les données descriptives d'un état dudit réseau électrique (2) sont caractéristiques d'un déficit actuel et/ou d'une surabondance future d'énergie d'origine renouvelable au sein dudit réseau électrique (2), de sorte à diminuer la capacité énergétique du réservoir (10).

6. Système selon la revendication 5, dans lequel le module de contrôle (12) est configuré pour ignorer la consigne de puissance lorsqu'une température de l'eau du réservoir (10) est inférieure à un premier seuil prédéfini.

7. Système selon la revendication 2 et l'une des revendications 4 à 6, en combinaison, dans lequel l'élément de gestion (30) est configuré pour émettre une consigne de puissance augmentant la consommation des moyens de chauffage (110, 111, 112) lorsque les données descriptives d'un état dudit réseau électrique (2) sont caractéristiques d'une surabondance actuelle et/ou d'un déficit futur d'énergie d'origine renouvelable au sein dudit réseau électrique (2), de sorte à augmenter la capacité énergétique du réservoir (10).

8. Système selon la revendication 7, dans lequel le module de contrôle (12) est configuré pour ignorer la consigne de puissance lorsqu'une température de l'eau du réservoir (10) est supérieure à un deuxième seuil prédéfini.

9. Système selon l'une des revendications 3 à 8, comprenant en outre un boitier (31) recevant lesdites données descriptives d'un état dudit réseau électrique (2) depuis un réseau de communication (3), le boitier (31) étant connecté audit élément de gestion (30) ou au module de contrôle (12).

10. Système selon l'une des revendications précédentes, dans lequel le moyen de chauffage (110) alimenté via ledit gradateur (120) présente une puissance nominale inférieure à 1.2 kW.

**11.** Système selon l'une des revendications précédentes, dans lequel au moins un actionneur de puissance (120, 121, 122) est un relais (121, 122).

**12.** Système selon la revendication 11, dans lequel chaque actionneur de puissance (120, 121, 122) est un gradateur (120) ou un relais (121, 122).

**13.** Système selon la revendication 12, dans lequel exactement un actionneur de puissance (120, 121, 122) est un gradateur (120).

**14.** Système selon l'une des revendications précédentes, dans lequel les moyens de chauffage (110, 111, 112) sont n résistances de résistance R égale disposées sur des branches en parallèle.

**15.** Système selon les revendications 13, 14 et l'une des revendications 3 à 7, en combinaison, dans lequel le module de contrôle (12) est configuré pour déterminer des ratios de puissance $K_g \in [0; 1]$ et $A_{i,i\in[1,n]} \in \{0;1\}$ associés respectivement au gradateur (120) et aux n-1 relais (121, 122), tels que

$$Pc = \left( K_g + \sum_{i=1}^{n-1} A_i \right) * U^2/R$$ avec Pc la puissance de consigne et U la tension aux bornes de chacune des branches en parallèle.

**16.** Procédé de modification de la consommation d'un dispositif de chauffage (11) électrique, le procédé comprenant des étapes de :

- réception de données descriptives d'un état d'un réseau électrique (2) ;
- génération par un élément de gestion (30) d'une consigne de puissance en fonction d'au moins lesdites données descriptives d'un état dudit réseau électrique (2) ;
- émission de ladite consigne à destination d'un module de contrôle (12) d'une pluralité de moyens de chauffage (110, 111, 112) du dispositif de chauffage (11), chaque moyen de chauffage (110, 111, 112) étant alimenté par le réseau électrique (2) via un actionneur de puissance (120, 121, 122) ;
- contrôle par le module de contrôle (12) de chaque actionneur de puissance (120, 121, 122) en fonction de la consigne de puissance de sorte à réguler en puissance les moyens de chauffage (110, 111, 112) ;

**caractérisée en ce que** chaque actionneur de puissance (120, 121, 122) est associé de manière unique au moyen de chauffage (110, 111, 12) qu'il alimente, et **en ce que** au moins un actionneur de puissance (120, 121, 122) est un gradateur (120).

**Patentansprüche**

**1.** System (1), umfassend:

- eine Heizvorrichtung (11), wobei die Vorrichtung (11) eine Vielzahl von Heizmitteln (110, 111, 112) umfasst, die von einem elektrischen Netz (2) gespeist werden;
- ein Modul zum Steuern (12) der Heizvorrichtung (11);

wobei jedes Heizmittel (110, 111, 112) über ein Leistungsstellglied (120, 121, 122) gespeist wird, wobei jedes Leistungsstellglied (120, 121, 122) vom Steuermodul (12) mindestens in Abhängigkeit von beschreibenden Daten eines Zustands des elektrischen Netzes (2) gesteuert wird, um die Leistung des Heizmittels (110, 111, 112), das dem Leistungsstellglied (120, 121, 122) zugeordnet ist, zu regeln, wobei das System **dadurch gekennzeichnet ist, dass** jedes Leistungsstellglied (120, 121, 122) dem Heizmittel (110, 111, 12), welches es speist, eindeutig zugeordnet ist, und dadurch, dass mindestens ein Leistungsstellglied (120, 121, 122) ein Dimmer (120) ist.

**2.** System nach Anspruch 1, das weiter einen Wasserspeicher (10) umfasst, wobei die Heizvorrichtung (11) das Wasser des Speichers (10) erhitzt.

**3.** System nach einem der Ansprüche 1 und 2, das weiter ein Verwaltungselement (30) umfasst, das dafür konfiguriert ist, das Steuermodul (12) in Abhängigkeit von den beschreibenden Daten eines Zustands des elektrischen Netzes (2) zu steuern.

**4.** System nach Anspruch 3, wobei das Steuermodul (12) jedes Leistungsstellglied (120, 121, 122) in Abhängigkeit von einem Leistungssollwert steuert, der vom Verwaltungselement (30) ausgegeben wird.

**5.** System nach den Ansprüchen 2 und 4 in Kombination, wobei das Verwaltungselement (30) dafür konfiguriert ist, einen Leistungssollwert auszugeben, der den Verbrauch der Heizmittel (110, 111, 112) senkt, wenn die beschreibenden Daten eines Zustands des elektrischen Netzes (2) für einen aktuellen Mangel und/oder einen künftigen Überschuss an Energie aus erneuerbaren Quellen innerhalb des elektrischen Netzes (2) charakteristisch sind, um die Energiekapazität des Speichers (10) zu senken.

**6.** System nach Anspruch 5, wobei das Steuermodul (12) dafür konfiguriert ist, den Leistungssollwert zu ignorieren, wenn eine Temperatur des Wassers des Speichers (10) kleiner ist als eine erste vordefinierte Schwelle.

**7.** System nach Anspruch 2 und einem der Ansprüche 4 bis 6 in Kombination, wobei das Verwaltungselement (30) dafür konfiguriert ist, einen Leistungssollwert auszugeben, der den Verbrauch der Heizmittel (110, 111, 112) steigert, wenn die beschreibenden Daten eines Zustands des elektrischen Netzes (2) für einen aktuellen Überschuss und/oder einen künftigen Mangel an Energie aus erneuerbaren Quellen innerhalb des elektrischen Netzes (2) charakteristisch sind, um die Energiekapazität des Speichers (10) zu steigern.

**8.** System nach Anspruch 7, wobei das Steuermodul (12) dafür konfiguriert ist, den Leistungssollwert zu ignorieren, wenn eine Temperatur des Wassers des Speichers (10) größer ist als eine zweite vordefinierte Schwelle.

**9.** System nach einem der Ansprüche 3 bis 8, das weiter einen Kasten (31) umfasst, der die beschreibenden Daten eines Zustands des elektrischen Netzes (2) von einem Kommunikationsnetz (3) empfängt, wobei der Kasten (31) mit dem Verwaltungselement (30) oder mit dem Steuermodul (12) verbunden ist.

**10.** System nach einem der vorstehenden Ansprüche, wobei das Heizmittel (110), das über den Dimmer (120) gespeist wird, eine Nennleistung von kleiner als 1,2 kW aufweist.

**11.** System nach einem der vorstehenden Ansprüche, wobei mindestens ein Leistungsstellglied (120, 121, 122) ein Relais (121, 122) ist.

**12.** System nach Anspruch 11, wobei jedes Leistungsstellglied (120, 121, 122) ein Dimmer (120) oder ein Relais (121, 122) ist.

**13.** System nach Anspruch 12, wobei exakt ein Leistungsstellglied (120, 121, 122) ein Dimmer (120) ist.

**14.** System nach einem der vorstehenden Ansprüche, wobei die Heizmittel (110, 111, 112) n Widerstände von gleichem Widerstand R sind, die an parallelen Zweigen angeordnet sind.

**15.** System nach den Ansprüchen 13, 14 und einem der Ansprüche 3 bis 7 in Kombination, wobei das Steuermodul (12) dafür konfiguriert ist, Leistungsverhältnisse $K_g \in [0; 1]$ und $A_{i, i \in [1,n]} \in \{0; 1\}$, die jeweils dem Dimmer (120) und den n-1 Relais (121, 122) zugeordnet sind, derart zu bestimmen, dass

$$Pc = \left( K_g + \sum_{i=1}^{n-1} A_i \right) * U^2 / R$$

, wobei Pc die Sollleistung ist, und U die Spannung an den Klemmen jedes der parallelen Zweige.

**16.** Verfahren zum Modifizieren des Verbrauchs einer elektrischen Heizvorrichtung (11), wobei das Verfahren Schritte umfasst des:

- Empfangens von beschreibenden Daten eines Zustands eines elektrischen Netzes (2);
- Erzeugens eines Leistungssollwerts durch ein Verwaltungselement (30) in Abhängigkeit von mindestens den beschreibenden Daten eines Zustands des elektrischen Netzes (2);
- Ausgebens des Sollwerts an ein Steuermodul (12) einer Vielzahl von Heizmitteln (110, 111, 112) der Heizvorrichtung (11), wobei jedes Heizmittel (110, 111, 112) vom elektrischen Netz (2) über ein Leistungsstellglied (120, 121, 122) gespeist wird;
- Steuerns jedes Leistungsstellglieds (120, 121, 122) vom Steuermodul (12) in Abhängigkeit vom Leistungssollwert, um die Leistung der Heizmittel (110, 111, 112) zu steuern;

**dadurch gekennzeichnet, dass** jedes Leistungsstellglied (120, 121, 122) dem Heizmittel (110, 111, 12), welches es speist, eindeutig zugeordnet ist, und dadurch, dass mindestens ein Leistungsstellglied (120, 121, 122) ein Dimmer (120) ist.

**Claims**

**1.** System (1) comprising:

- a heating device (11), the device (11) comprising a plurality of heating means (110, 111, 112) powered by an electric network (2);
- a control module (12) for said heating device (11);

each heating means (110, 111, 112) being powered via a power actuator (120, 121, 122), each power actuator (120, 121, 122) being controlled by the control module (12) according to at least data descriptive of a state of said electric network (2), so as to regulate the power of the heating means (110, 111, 112) associated with said power actuator (120, 121, 122), the system being **characterised in that** each power actuator (120, 121, 122) is associated in a unique manner with the heating means (110, 111, 12) that it powers, and **in that** at least one power actuator (120, 121, 122) is a dimmer (120).

**2.** System according to claim 1, further comprising a water tank (10), the heating device (11) heating the water of the tank (10).

**3.** System according to one of claims 1 and 2, further comprising a management element (30) configured to control the control module (12) according to said data descriptive of a state of said electric network (2).

4. System according to claim 3, wherein the control module (12) controls each power actuator (120, 121, 122) according to a power setpoint emitted by the management element (30).

5. System according to claims 2 and 4 in combination, wherein the management element (30) is configured to emit a power setpoint reducing the consumption of the heating means (110, 111, 112) when the data descriptive of a state of said electric network (2) is characteristic of a current deficit and/or of a future overabundance of renewable energy in said electric network (2), so as to reduce the power capacity of the tank (10).

6. System according to claim 5, wherein the control module (12) is configured to ignore the power setpoint when a temperature of the water of the tank (10) is less than a first predefined threshold.

7. System according to claim 2 and one of claims 4 to 6, in combination, wherein the management element (30) is configured to emit a power setpoint increasing the consumption of the heating means (110, 111, 112) when the data descriptive of a state of said electric network (2) is characteristic of a current overabundance and/or of a future deficit of renewable energy in said electric network (2), so as to increase the power capacity of the tank (10).

8. System according to claim 7, wherein the control module (12) is configured to ignore the power setpoint when a temperature of the water of the tank (10) is greater than a second predefined threshold.

9. System according to one of claims 3 to 8, further comprising a case (31) receiving said data descriptive of a state of said electric network (2) from a communication network (3), the case (31) being connected to said management element (30) or to the control module (12).

10. System according to one of the previous claims, wherein the heating means (110) powered via said dimmer (120) has a nominal power of less than 1.2kW.

11. System according to one of the previous claims, wherein at least one power actuator (120, 121, 122) is a relay (121, 122).

12. System according to claim 11, wherein each power actuator (120, 121, 122) is a dimmer (120) or a relay (121, 122).

13. System according to claim 12, wherein exactly one power actuator (120, 121, 122) is a dimmer (120).

14. System according to one of the previous claims, wherein the heating means (110, 111, 112) are n resistors having an equal resistance R disposed on branches in parallel.

15. System according to claims 13, 14 and one of claims 3 to 7, in combination, wherein the control module (12) is configured to determine power ratios $K_g \in [0;1]$ and $A_{i,i\in[1,n]} \in \{0;1\}$ respectively associated with the dimmer (120) and with the n-1 relays (121, 122), such that $Pc = \left(K_g + \sum_{i=1}^{n-1} A_i\right) * U^2/R$ with Pc the power setpoint and U the voltage at the terminals of each of the branches in parallel.

16. Method for modifying the consumption of an electric heating device (11), the method comprising steps of:

   - reception of data descriptive of a state of an electric network (2);
   - generation by a management element (30) of a power setpoint according to at least said data descriptive of a state of said electric network (2);
   - emission of said setpoint to a control module (12) for a plurality of heating means (110, 111, 112) of the heating device (11), each heating means (110, 111, 112) being powered by the electric network (2) via a power actuator (120, 121, 122);
   - control by the control module (12) of each power actuator (120, 121, 122) according to the power setpoint so as to regulate the power of the heating means (110, 111, 112);

   **characterised in that** each power actuator (120, 121, 122) is associated in a unique manner with the heating means (110, 111, 12) that it powers, and **in that** at least one power actuator (120, 121, 122) is a dimmer (120).

FIG. 1

## RÉFÉRENCES CITÉES DANS LA DESCRIPTION

**Documents brevets cités dans la description**

- US 20090188486 A
- WO 2012172193 A
- EP 2610999 A
- EP 0104979 A